# FASCICULE DE BREVET EUROPEEN

(11) **EP 3 459 661 B1**
(45) Date de publication et mention de la délivrance du brevet: **26.10.2022**
(21) Numéro de dépôt: 18196015.4
(22) Date de dépôt: 21.09.2018
(51) Int. Cl.: B23B 31/117, B23B 31/32, B23B 31/30, B25J 15/00, B25J 7/00, B25J 9/00, B25J 15/12

(54) **MICRO-PINCE A STRUCTURE MONOBLOC**
MIKROZANGE MIT MONOBLOCKSTRUKTUR
SINGLE-PIECE STRUCTURE MICRO-CLIP

(30) Priorité: 25.09.2017 FR 1758847
(43) Date de publication de la demande: 27.03.2019
(73) Titulaire: Commissariat à l'énergie atomique et aux énergies alternatives, 75015 Paris (FR)
(72) Inventeur: ANDRE, Johan, 21000 DIJON (FR)
(74) Mandataire: Brevalex

(56) Documents cités:
- EP-A2- 0 441 060
- WO-A1-02/076685
- DE-A1-102012 100 916
- DE-B3-102005 046 160
- US-A1- 2006 043 749

## Description

Le sujet de l'invention est une micro-pince à structure monobloc.

Les micro-pinces considérées ici servent à saisir de petits objets, typiquement de quelques millimètres, ou de l'ordre du centimètre.

Il est délicat de saisir de tels objets de façon fiable, sans risque de les laisser s'échapper ou au contraire de les soumettre à un effort de serrage excessif, par les pinces usuelles. On est alors tenté d'utiliser des micro-pinces, aux dimensions appropriées à la petitesse des objets à saisir, pour satisfaire à ces conditions. La miniaturisation des pinces usuelles, composées d'éléments assemblés entre eux, peut toutefois se révéler difficile, et c'est pourquoi on a proposé des micro-pinces à structure monobloc. Un exemple est donné dans le document WO 99/28094 A1, où la structure monobloc de la pince est en alliage à mémoire de forme, dont le changement de phase induit une déformation qui conduit à rapprocher les doigts de saisie l'un de l'autre et accomplir le serrage d'un objet. Les doigts ont un bord arrière dont une extrémité est reliée à un actionneur, qui subit les déformations les plus importantes lors du changement de phase de l'alliage, par un premier raccord souple, et dont l'extrémité opposée est reliée à un élément de contact par un autre raccord souple. Les déformations de l'actionneur provoquent ainsi des rotations en sens opposés des doigts autour des raccords souples aux éléments de contact, et donc les variations de leur écartement.

Des portions de l'actionneur et des éléments de contact doivent être toutefois montés sur un substrat pour soutenir la micro-pince, tout en lui permettant de se déformer de la façon voulue. Ce montage peut se révéler difficile à assurer. Et la conception de cette pince semble assez délicate pour obtenir un effort de serrage bien déterminé, ni insuffisant ni excessif, puisque l'exploitation d'un alliage à mémoire de forme revient plutôt à basculer entre deux écartements invariables des doigts, et quelles que soient les dimensions éventuellement variables des objets à saisir. Les propriétés de la pince dépendent aussi de la façon dont elle est fixée au substrat. Enfin, la structure de la pince, relativement compliquée, semble pouvoir être obtenue seulement dans une forme bidimensionnelle, avec seulement deux doigts opposés aptes à serrer seulement une section d'un objet, alors qu'une saisie par des doigts plus nombreux, éventuellement répartis autour d'un cercle, serait souvent préférable.

L'invention a été conçue comme une amélioration de micro-pinces monobloc pour s'affranchir de tels inconvénients, et ses buts sont de permettre des saisies d'objets par mouvements combinés de plusieurs doigts en gardant une bonne maîtrise des efforts et des mouvements appliqués, de manière à saisir l'objet de façon fiable, sans risque excessif de le laisser s'échapper ou au contraire de le rompre par un serrage excessif. La structure de la micro-pince est monobloc pour qu'elle soit bien adaptée aux objets de petites dimensions. Contrairement à des micro-pinces connues, elle doit aussi être facile à fabriquer, y compris avec une structure tridimensionnelle, comprenant trois doigts ou plus, arrangés autour de l'objet saisi.

Sous une forme générale, elle concerne une micro-pince à structure monobloc comprenant au moins deux doigts de saisie à écartement variable, un support auquel les doigts sont unis par des raccords souples et un actionneur relié aux doigts et déformable pour régler l'écartement des doigts ; l'actionneur est un diaphragme souple, et le support comporte un manchon continu raccordable à un équipement de fourniture de fluide sous pression et dans lequel le diaphragme est monté par un contour continu.

Une cohérence plus grande de la micro-pince est obtenue grâce au support auquel l'actionneur et les doigts sont tous reliés, ce qui permet de transmettre avec une bonne précision les mouvements de l'actionneur à chacun des doigts. Et le moyen d'actionnement sera un fluide fourni à une chambre délimitée notamment par le support et le diaphragme, dont la pression pourra être réglée pour commander l'écartement des doigts ou l'effort de serrage à des valeurs déterminées et choisies par l'utilisateur.

Et selon l'invention, le diaphragme est globalement conique à un état libre et s'étend entre les doigts à partir du contour monté sur le support.

Les mouvements des doigts gardent alors une certaine indépendance, grâce à la souplesse de certains constituants de la pince, dont le diaphragme conique, tout autour duquel les doigts peuvent se raccorder à distance les uns des autres, au lieu de converger vers une zone ponctuelle unique au centre du diaphragme comme dans d'autres réalisations de micro-pince : le manchon conique peut plus facilement accepter des irrégularités de déformation se traduisant par des mouvements différents des doigts. Or de tels mouvements différents sont susceptibles de survenir dès que la pince n'est pas parfaitement alignée avec l'objet à saisir ou que l'objet a une forme irrégulière, et la fermeté de la préhension, ou même la résistance de la pince ou de l'objet s'ils sont fragiles, peuvent être mises en danger si la construction de la pince interdit de telles différences de mouvements des doigts. Le document DE 10 2012 00916 A1, décrit une micro-pince à diaphragme plan au centre duquel tous les doigts convergent, qui est dépourvue de cette souplesse, et il est préconisé d'équiper chacun des doigts d'un capteur de pression de serrage pour réduire les risques de surcharge.

Dans des conceptions principalement envisagées, le support est annulaire et le diaphragme est de forme axisymétrique, propice à des mouvements ou des efforts de serrage uniformes pour tous les doigts. Le diaphragme peut comprendre des ondulations ou des nervures circulaires qui renforcent cette axisymétrie et la régularité de ses déformations sous la pression du fluide. Il peut être globalement plat à un état libre, ou, par exemple, globalement conique, en s'étendant alors entre les doigts, à partir du contour monté sur le support. Dans ce dernier cas, il peut servir à soutenir une embase sur laquelle l'objet saisi peut rester posé, le diaphragme s'étendant alors entre le contour monté sur le support et un contour opposé qui est monté sur cette embase.

Le diaphragme pourra être relié aux doigts de saisie par des biellettes unies à ceux-ci et au diaphragme par des raccords souples.

Ainsi qu'on l'a mentionné, certaines réalisations préférées de l'invention comprennent au moins trois doigts répartis autour du support, notamment en cercle régulier. Le problème d'assurer une souplesse de la pince et une différence autorisée des mouvements des doigts devient plus aigu pour ces réalisations. Il est aussi possible d'utiliser des doigts comprenant chacun une extrémité à deux portions de saisie, les portions de saisie des différents doigts formant un cercle discontinu, et chacun étant apte à venir au contact de l'objet saisi. Cette dernière disposition est bien compatible avec deux doigts opposés l'un à l'autre. Comme dans les conceptions à au moins trois doigts, une préhension de l'objet est faite sur sa circonférence complète, et elle est plus sûre que les préhensions en deux endroits opposés de l'objet, faites par les micro-pinces bidimensionnelles.

Dans certaines conceptions préférées de l'invention, les doigts sont à un écartement minimal, correspondant à un état de saisie quand le diaphragme est à un état libre, et à des écartements plus grands quand le diaphragme est à un état déformé par le fluide. Il suffit alors de relâcher la pression du fluide pour assurer une saisie stable, avec un effort de serrage pouvant être déterminé dès la conception de la pince, et approprié à un objet prévu pour être saisi.

La micro-pince de l'invention peut notamment être réalisée par une technique de fabrication par addition de matière par une machine à commande numérique, dite imprimante tridimensionnelle.

Les différents aspects, caractéristiques et avantages de l'invention mentionnés ci-dessus, ainsi que d'autres, apparaîtront maintenant mieux au commentaire des figures suivantes de certaines réalisations de celle-ci, non exclusives d'autres :
- la figure 1 représente une coupe axiale d'une première réalisation de micro-pince ;
- les figure 2 et 3, des vues extérieures en perspective oblique de l'avant et de l'arrière de la micro-pince ;
- la figure 4, une coupe axiale d'une seconde réalisation ;
- la figure 5, une vue extérieure en perspective oblique de l'avant de cette deuxième réalisation de micro-pince ;
- la figure 6, le détail de l'extrémité des doigts ;
- la figure 7, une coupe axiale d'une troisième réalisation ;
- la figure 8, une vue extérieure en perspective oblique de l'avant de cette troisième réalisation ;
- la figure 9, une coupe axiale d'une quatrième réalisation de la micro-pince ;
- la figure 10, une vue en perspective de côté de cette quatrième réalisation ;
- la figure 11, une vue en perspective de l'extrémité des doigts ;
- et la figure 12, une vue de l'avant de la micro-pince.

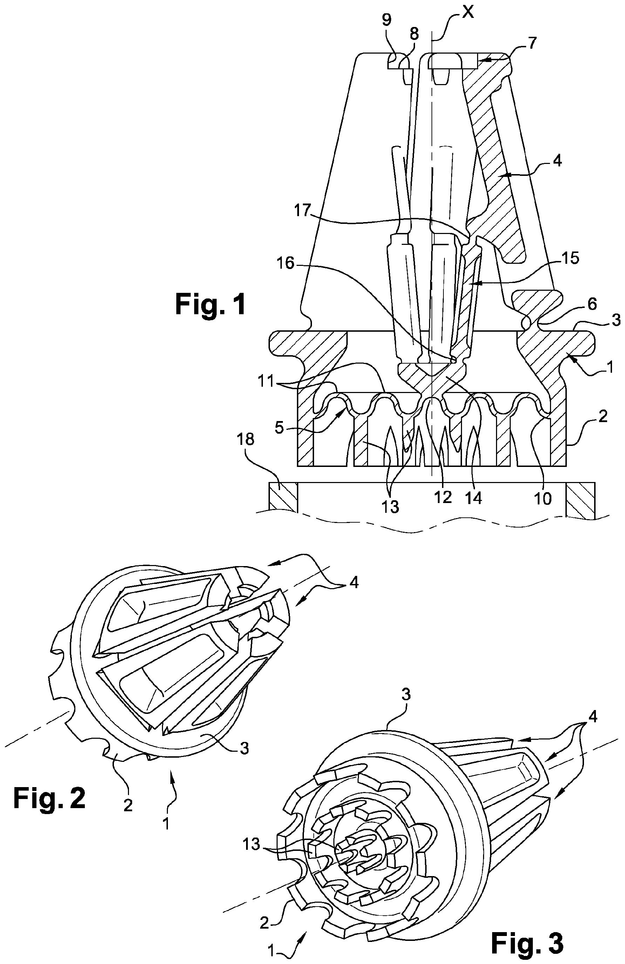

Une première réalisation de micro-pince, décrite au moyen des premières figures 1 à 3, comprend un support 1 de structure circulaire, comprenant un manchon 2 cylindrique prolongé vers l'avant par une embase 3 plate, puis des doigts 4 de saisie d'un objet, au nombre de cinq dans cette réalisation, et un diaphragme 5 souple d'actionnement de la micro-pince. Le support 1 est une pièce de révolution autour de laquelle les doigts 4 sont uniformément répartis, en étant reliés à la face avant de l'embase 3 par des raccords souples 6. Dans cette description, l'avant de la micro-pince correspond à la direction vers les bouts des doigts 4 et l'endroit où l'objet est saisi, et on appellera souples des constituants de la micro-pince capables de se déformer beaucoup plus que les autres constituants, comme les doigts 4 et le support 1 qu'on pourra considérer comme rigides, quand une sollicitation mécanique leur est appliquée. En d'autres termes, les déformations seront localisées presque exclusivement sur ces constituants dits souples. Les doigts 4 ont une disposition conique et leurs extrémités avant, opposées aux raccords souples 6, forment des mors 7 de préhension d'un objet. Les mors 7 comprennent chacune une surface plane 8 dirigée vers l'avant et une surface intérieure 9 en arc de cercle, qui permettent à l'objet d'être saisi en étant posé sur celles-là et enserré entre celles-ci.

Le diaphragme 5 est logé dans le support 1 et plus précisément dans le manchon 2, en ayant un contour extérieur 10 circulaire joint sans discontinuité à la face intérieure de celui-ci. Il est essentiellement plat à l'état libre ou de repos, c'est-à-dire qu'il s'étend dans un plan moyen situé perpendiculairement à l'axe X de la micro-pince. Il n'est toutefois pas plat, mais composé d'ondulations 11 concentriques à son centre 12, et il comprend encore, sur la face dirigée vers l'arrière de la micro-pince, des nervures 13 également circulaires et concentriques au centre 12. La structure composée du support 1 et du diaphragme 5 est donc axisymétrique à l'axe X.

Le centre 12 porte une rondelle 14 rigide reliée à chacun des doigts 4 par une biellette 15 de renvoi, munie à ses extrémités de liaison à la rondelle 14 et au doigt 4 de raccords souples 16 et 17.

La micro-pince est conçue pour que son support 1 soit raccordé de façon étanche à un tube 18 ou un équipement analogue qui soit apte à former une chambre close et étanche avec le support 1 et le diaphragme 5, dans laquelle un fluide sous pression peut être introduit. La pression du fluide déforme le diaphragme 5 en le faisant bomber vers l'avant, avec l'effet de pousser sur les biellettes 15 de renvoi et de faire basculer les doigts 4 autour des raccords souples 6, en les écartant les uns des autres, notamment à l'endroit des mors 7. En écartant les mors 7, il est possible de saisir un objet ou de relâcher un objet préalablement saisi. En relâchant la pression du fluide, la micro-pince, soumise auparavant à des sollicitations élastiques, revient à l'état libre dans lequel les doigts 4 sont à leur écartement minimal, ou, si un objet a été saisi, il est enserré avec un effort déterminé et modéré. Inversement, le diaphragme 5 peut être sollicité par une dépression pour directement fermer les doigts 4. Les déformations du diaphragme 5 sont en principe axisymétriques, ce que favorisent les ondulations 11 et les nervures 13, mais la structure de la micro-pince est toutefois suffisamment souple dans l'ensemble pour permettre une légère indépendance des mouvements des doigts 4, s'adaptant à des irrégularités éventuelles de forme des objets saisis.

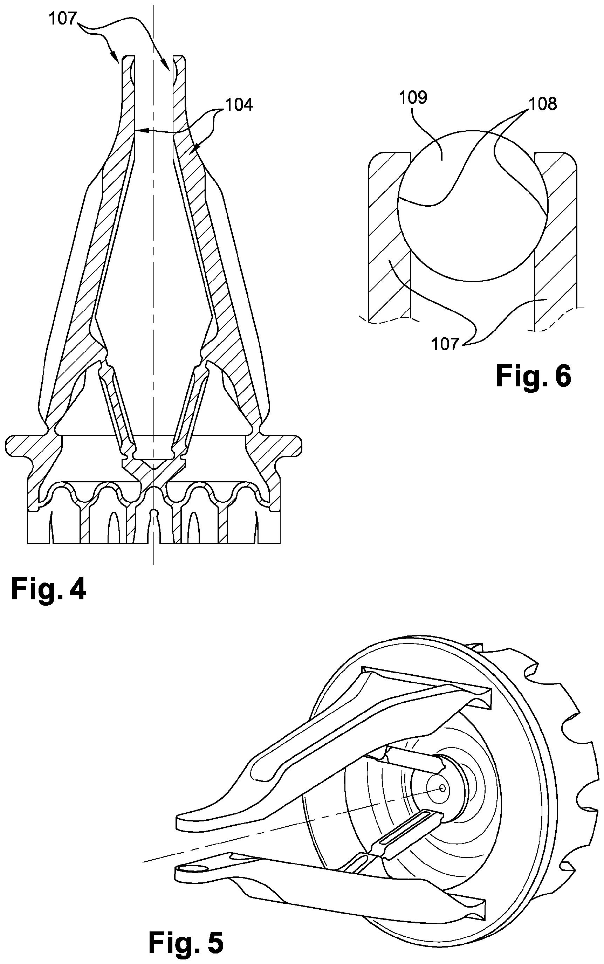

Une variante de réalisation est décrite au moyen des figures 4, 5 et 6. Elle se distingue de la précédente principalement en ce que les doigts, maintenant 104, sont au nombre de deux seulement et opposés l'un à l'autre, et en ce que leurs mors, maintenant 107, comprennent des surfaces concaves 108 à leurs faces internes de préhension, qui se font face. Cette disposition permet de saisir et bien retenir des billes 109 entre les surfaces concaves 108. Le reste de la micro-pince est inchangé. D'une façon plus générale, les mors peuvent être conçus pour avoir des faces de préhension ayant des formes complémentaires des formes des objets qu'on prévoit de saisir. Les mors pourront ainsi, par exemple, posséder des faces internes à concavités cylindriques pour saisir des objets cylindriques. Deux doigts opposés sont alors parfaitement suffisants pour retenir de façon sûre et stable l'objet saisi.

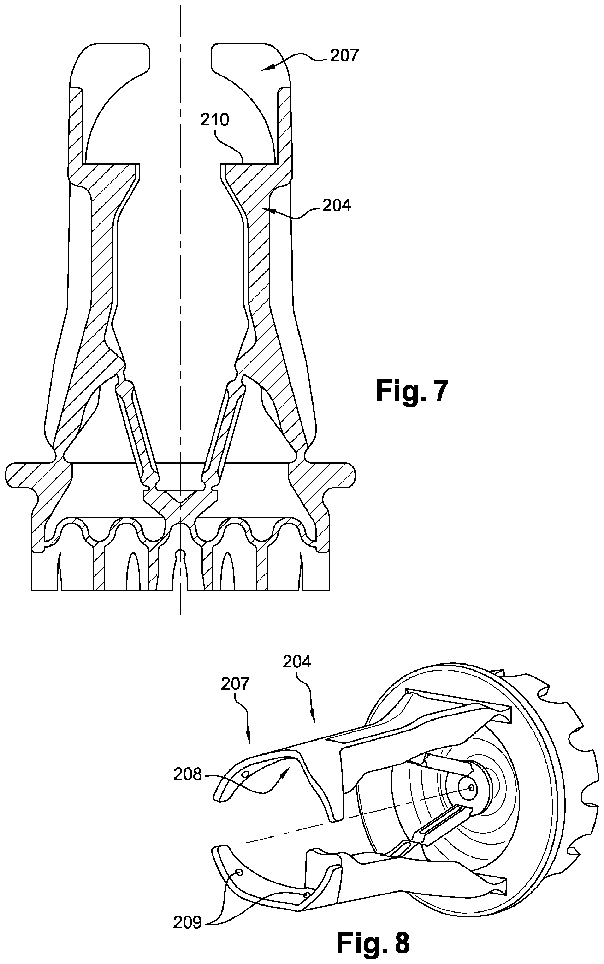

Un autre exemple de réalisation est celui des figures 7 et 8, qui décrit une réalisation qui se distingue de la préférence en ce que les doigts, maintenant 204, et toujours au nombre de deux et opposés à l'un à l'autre, comprennent des mors 207 fourchus, comprenant chacun une extrémité extérieure incurvée en arc 208 à deux extrémités en pointes 209 dirigées vers l'autre des mors 207. De plus, les mors 207 présentent une surface plane 210 inférieure, de pose de l'objet saisi. Ces mors 207 permettent de saisir aisément des objets cylindriques, en faisant reposer leur face inférieure sur les surfaces planes 210 et en enserrant leur surface périphérique entre les arcs 208, ou bien entre les pointes 209, qui sont situées approximativement en cercle discontinu tout en se faisant face par paires, chacune des pointes 209 venant en face d'une pointe 209 de l'autre des doigts 204.

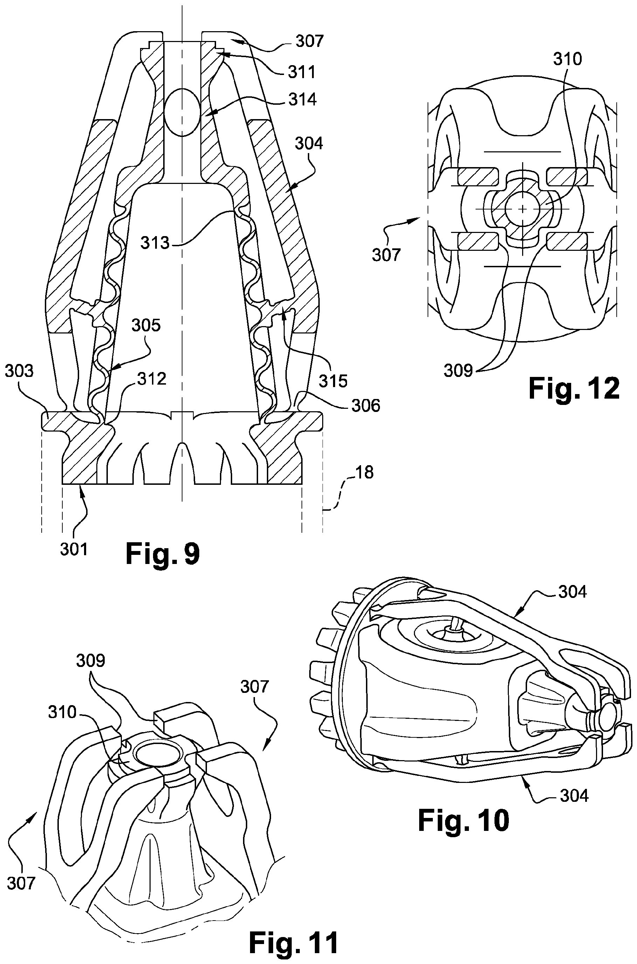

Une autre réalisation est décrite au moyen des figures 9, 10, 11 et 12. Les doigts, maintenant 304, peuvent être analogues à ceux de la réalisation immédiatement précédente en ce qu'ils comportent des mors 307 fourchus, dotés chacun à leurs extrémités de deux pointes 309 de préhension qui viennent en cercle autour de l'objet à saisir. Quand les doigts 304 sont rapprochés, des paires des pointes 309, situées sur les deux doigts 307 et se faisant face, s'approchent pour réaliser le serrage. La réalisation comprend une surface de pose de l'objet, maintenant 310, qui n'est pas placée sur les mors 307, mais au sommet d'un socle supérieur 311 située entre les doigts 304 et séparée d'eux. Le diaphragme 305 de cette réalisation est différent et de forme conique, s'étendant selon l'axe X de la micro-pince, entre un premier contour, maintenant 312, circulaire uni au support 301 (maintenant à la face supérieure de son embase 303), et un autre contour 313, opposé au précédent, uni au socle supérieur 311. Le fonctionnement du dispositif est identique à celui des précédents, la chambre dans laquelle la pression du fluide actionneur peut être instaurée étant délimitée par le tube 18, le support 301, le diaphragme 305, et maintenant aussi par le socle supérieur 311, qui est ici évidé, mais obstrué par un bouchon 314. Comme précédemment, des biellettes de renvoi, maintenant 315, sont utilisées pour relier le diaphragme 305 aux doigts 304, mais leur disposition est ici différente, puisqu'elles sont ici à peu près perpendiculaires aux doigts 304, avec une disposition à peu près perpendiculaire à l'axe X, et qu'elles ne convergent pas les unes vers les autres, mais sont situées tout autour du diaphragme 305. La déformation de ce dernier s'exerce donc par un gonflement entre les contours 312 et 313 dans la direction perpendiculaire à l'axe X, avec le même effet d'écarter les doigts 304 en les faisant basculer sur le support 301 à travers leur liaison souple 306 à celui-ci. Comme précédemment, le diaphragme 305 est rendu plus rigide par des ondulations circulaires et concentriques à l'axe X, qui sont toutefois superposées dans la direction axiale X au lieu d'appartenir à une même région plane. La forme conique du diaphragme 305 et l'écartement des points de raccord des biellettes de renvoi 315 au diaphragme 305 permettent une certaine irrégularité de déformation et de mouvement des doigts 304, bénéfique pour une bonne saisie des objets puisque tous les doigts 304 peuvent participer au serrage d'objets même de forme irrégulière, surtout si les doigts 304 sont nombreux, et sans que des efforts excessifs soient appliqués.

La micro-pince de l'invention, notamment dans les réalisations décrites, sera de préférence construite dans une technique dite d'addition de matière, par une machine d'impression tridimensionnelle, la fabrication étant facilitée par la forme simple et largement axisymétrique de ces constituants. Le matériau de fabrication doit pouvoir subir des déformations élastiques répétées pour passer entre ses deux états principaux, mais aucune autre condition ne s'impose.

## Revendications

1. Micro-pince à structure monobloc comprenant au moins deux doigts (4, 104, 204, 304) de saisie à écartement variable, un support (1, 301) auquel les doigts sont unis par des raccords souples (16) et un actionneur relié aux doigts et déformable pour régler l'écartement des doigts, où l'actionneur est un diaphragme (5, 305) souple, le support comporte un manchon (2) continu raccordable de façon étanche à un équipement (18) de fourniture de fluide sous pression et dans lequel le diaphragme (5, 305) est monté par un contour (10, 312) continu, **caractérisée en ce que** le diaphragme (305) est globalement conique à un état libre et s'étend entre les doigts (304) à partir du contour (312) monté sur le support (301).

2. Micro-pince selon la revendication 1, **caractérisée en ce que** le support est annulaire et le diaphragme est axisymétrique.

3. Micro-pince selon la revendication 2, **caractérisée en ce que** le diaphragme comprend des ondulations (11) et/ou des nervures (13).

4. Micro-pince selon l'une quelconque des revendications 1 à 3, **caractérisée en ce que** le diaphragme (5) est globalement plat à un état libre.

5. Micro-pince selon la revendication 1, **caractérisée en ce que** le diaphragme (305) s'étend entre ledit contour (312) monté sur le support et un contour (312) continu opposé, monté sur un socle (311) comprenant une surface de pose (310) d'un objet à saisir par les doigts.

6. Micro-pince selon l'une quelconque des revendications précédentes, **caractérisée en ce que** le diaphragme est relié aux doigts par des biellettes (15, 315) unies aux doigts et au diaphragme par des raccords souples (16, 17).

7. Micro-pince selon la revendication 6, **caractérisée en ce que** les raccords souples unissant les biellettes au diaphragme aboutissent à une rondelle (14) rigide fixée à un centre (12) du diaphragme, les biellettes ayant une disposition conique convergente vers la rondelle.

8. Micro-pince selon l'une quelconque des revendications précédentes, **caractérisée en ce que** les doigts sont au moins trois, répartis autour du support.

9. Micro-pince selon l'une quelconque des revendications 1 à 8, **caractérisée en ce que** les doigts comprennent chacun une extrémité à deux pointes (209, 309) de saisie, les pointes de saisie des doigts formant un cercle discontinu.

10. Micro-pince selon l'une quelconque des revendications précédentes, **caractérisée en ce que** les doigts sont à un écartement minimal quand le diaphragme est à un état libre, et à des écartements plus grands quand le diaphragme est à un état déformé par le fluide.

11. Micro-pince selon l'une quelconque des revendications précédentes, **caractérisée en ce qu'**elle est réalisée par une technique de fabrication par addition de matière par une machine à commande numérique.

## Patentansprüche

1. Mikrozange mit Monoblockstruktur, umfassend mindestens zwei Greiffinger (4, 104, 204, 304) mit variablem Abstand, eine Halterung (1, 301), an der die Finger durch flexible Verbindungen (16) miteinander vereint sind, und ein Betätigungselement, das mit den Fingern verbunden und verformbar ist, um den Abstand der Finger zu regulieren, wobei das Betätigungselement eine flexible Membran (5, 305) ist, die Halterung eine Umhüllung (2) aufweist, die wasserdicht mit einer Apparatur (18) zur Bereitstellung von Druckfluid verbunden ist und in der die Membran (5, 305) an einem durchgehenden Rand (10, 312) angebracht ist, **dadurch gekennzeichnet, dass** die Membran (305) in einem freien Zustand im Allgemeinen konisch ist und sich zwischen den Fingern (304) von dem auf der Halterung (301) angebrachten Rand (312) erstreckt.

2. Mikrozange nach Anspruch 1, **dadurch gekennzeichnet, dass** die Halterung ringförmig ist und die Membran achsensymmetrisch ist.

3. Mikrozange nach Anspruch 2, **dadurch gekennzeichnet, dass** die Membran Wellen (11) und/oder Rippen (13) umfasst.

4. Mikrozange nach einem der Ansprüche 1 bis 3, **dadurch gekennzeichnet, dass** die Membran (5) in einem freien Zustand im Allgemeinen flach ist.

5. Mikrozange nach Anspruch 1, **dadurch gekennzeichnet, dass** die Membran (305) sich zwischen dem an der Halterung angebrachten Rand (312) und einem gegenüberliegenden durchgehenden Rand (312) erstreckt und auf einem Sockel (311) angebracht ist, der eine Abstellfläche (310) für ein Objekt umfasst, das von den Fingern gegriffen werden soll.

6. Mikrozange nach einem der vorhergehenden Ansprüche, **dadurch gekennzeichnet, dass** die Membran mit den Fingern durch Verbindungsglieder (15, 315), die mit den Fingern und der Membran durch flexible Verbindungen (16, 17) miteinander vereint sind, verbunden ist.

7. Mikrozange nach Anspruch 6, **dadurch gekennzeichnet, dass** die flexiblen Verbindungen, die die Verbindungsglieder mit der Membran miteinander vereinen, an einer starren Scheibe (14) anliegen, die an einer Mitte (12) der Membran fixiert ist, wobei die Verbindungsglieder eine konische, konvergierende Anordnung zu der Scheibe hin aufweisen.

8. Mikrozange nach einem der vorhergehenden Ansprüche, **dadurch gekennzeichnet, dass** die Finger mindestens drei Finger sind, die um die Halterung verteilt sind.

9. Mikrozange nach einem der Ansprüche 1 bis 8, **dadurch gekennzeichnet, dass** die Finger jeweils ein Ende mit zwei Greiffpunkten (209, 309) umfassen, wobei die Greiffpunkte der Finger einen unterbrochenen Kreis bilden.

10. Mikrozange nach einem der vorhergehenden Ansprüche, **dadurch gekennzeichnet, dass** die Finger sich in einem minimalen Abstand befinden, wenn die Membran in einem freien Zustand ist, und in größeren Abständen, wenn die Membran in einem durch das Fluid verformten Zustand ist.

11. Mikrozange nach einem der vorhergehenden Ansprüche, **dadurch gekennzeichnet, dass** sie durch eine Fertigungstechnik durch Hinzufügen von Material durch eine numerisch gesteuerte Maschine hergestellt wird.

## Claims

1. Micro-gripper with one-piece structure including at least two gripping fingers (4, 104, 204, 304) with variable spacing, a support (1, 301) to which the fingers are joined by flexible couplings (16) and an actuator connected to the fingers and deformable to adjust the spacing of the fingers, wherein the actuator is a flexible diaphragm (5, 305), the support comprises a continuous sleeve (2) that can be coupled in a leak tight manner to an equipment (18) for supplying pressurised fluid and in which the diaphragm (5, 305) is mounted by a continuous contour (10, 312), **characterised in that** the diaphragm (305) is on the whole conical in a free state and extends between the fingers (304) from the contour (312) mounted on the support (301).

2. Micro-gripper according to claim 1, **characterised in that** the support is annular and the diaphragm is axisymmetric.

3. Micro-gripper according to claim 2, **characterised in that** the diaphragm includes undulations (11) and/or ribs (13).

4. Micro-gripper according to any one of claims 1 to 3, **characterised in that** the diaphragm (5) is on the whole flat in a free state.

5. Micro-gripper according to claim 1, **characterised in that** the diaphragm (305) extends between said contour (312) mounted on the support and an opposite continuous contour (312), mounted on a pedestal (311) including a surface for setting down (310) an object to be gripped by the fingers.

6. Micro-gripper according to any one of the preceding claims, **characterised in that** the diaphragm is connected to the fingers by links (15, 315) joined to the fingers and to the diaphragm by flexible couplings (16, 17).

7. Micro-gripper according to claim 5, **characterised in that** the flexible couplings joining the links to the diaphragm end up in a rigid washer (14) fixed to a centre (12) of the diaphragm, the links having a conical arrangement converging towards the washer.

8. Micro-gripper according to any one of the preceding claims, **characterised in that** the fingers are at least three, spread out around the support.

9. Micro-gripper according to any one of claims 1 to 8, **characterised in that** the fingers each include an end with two gripping tips (209, 309), the gripping tips of the fingers forming a discontinuous circle.

10. Micro-gripper according to any one of the preceding claims, **characterised in that** the fingers are at a minimum spacing when the diaphragm is in a free state, and at greater spacings when the diaphragm is in a state deformed by the fluid.

11. Micro-gripper according to any one of the preceding claims, **characterised in that** it is produced by a manufacturing technique by addition of material by a numerical control machine.
